# EUROPEAN PATENT APPLICATION

(11) **EP 2 829 894 A1**
(43) Date of publication of application: **28.01.2015**
(21) Application number: 14177595.7
(22) Date of filing: 18.07.2014
(51) Int. Cl.: G01S 17/48, G01S 17/42, G01S 7/481

(54) **Laser scanning device**

(30) Priority: 25.07.2013 JP 2013154502
(71) Applicant: Funai Electric Co., Ltd., Daito city Osaka 574-0013 (JP)
(72) Inventor: Horibe, Ryusuke, Osaka 574-0013 (JP); Murayama, Manabu, Osaka 574-0013 (JP)
(74) Representative: Osha Liang SARL

(57) **Abstract**

A laser scanning device (1) includes a light source (11) and a light scanner (17) that scans a laser light emitted from the laser light source (11). The light source (17) is configured to emit a laser light incident to the light scanner (17) from a plurality of directions.

## Description

### [Technical Field]

The present invention relates to a laser scanning device and a method for measuring a distance to an object.

### [B ackground Art]

Laser scanning devices that detect the presence of an object (such as an obstacle or a suspicious person) and measure a distance to the object, are known. For example, the object may be a target of a security surveillance or the like, an obstacle existing in the vicinity of a mobility aid such as a vehicle, walker, and the like, or a suspicious person in a facility and the like.

Methods for determining the shape of an object and measuring a distance to the object include the triangulation method, the time-of-flight method, and the phase-difference-method. The triangulation method is a technique that uses the relationship between a size of an angle and a length of a side of a triangle. The triangulation method is used for measuring short distances of roughly 0.1 to 2 m and may obtain a high accuracy measurement of within 1 mm. The time-of-flight method is a technique that obtains three-dimensional data from a time and irradiation direction of a round trip of a laser light. Long distance measurements up to several hundred or several thousand m are possible, and the measurement accuracy is about 1 to 10 mm. Furthermore, the phase-difference-method is a method including emitting and intensely modulating a certain frequency of a laser light and also receiving the light reflected by the object. The distance to the object is measured based on the phase difference of the emitted light (the reference light) and the reflected light. The phase-difference-method has a performance comparable to the performance of the time-of-flight method (for example, see Patent Document 1).

### [Related Art Documents]

### [Patent Documents]

[Patent Document 1] Japanese Unexamined Patent Application Publication No. H07-318648
[Patent Document 2] Japanese Unexamined Patent Application Publication No. 2009-63339

Irradiating a laser light to an object existing within a fixed range requires scanning a light emitted from a laser light source at a fixed range. Methods for scanning the laser light include making laser light incident to a mirror that changes a tilt angle, such as a Galvanometer mirror, polygon mirror, micro electro mechanical system (MEMS) mirror, and the like, and then scanning the laser light reflected by the mirror. Galvanometer mirrors and polygon mirrors are displaced by motor rotation, thereby ensuring a large mirror displacement. However, the displacement tends to be large because a motor is necessary. Meanwhile, it is common for a micro electro mechanical system (MEMS) mirror to be displaced by mechanical resonance. The mirror displacement may be small because a motor is not necessary, but it is difficult to ensure a large mirror displacement and a narrow scanning range.

### [Summary of the Invention]

One or more embodiments of the present invention provide a laser scanning device for measuring a distance to an object which has a wide scanning range and can be realized in a small size.

The laser scanning device according to one or more embodiments of the present invention may comprise: a light source; and a light scanner configured to scan a laser light emitted from the laser light source, wherein the light source is configured to emit a laser light incident to the light scanner from a plurality of directions.

Furthermore, according to one or more embodiments of the laser scanning device, the laser light source may be configured to emit the laser light so that the laser light is incident to the light scanner from a plurality of directions via a plurality of different optical paths. For example, the optical paths may be two or four different optical paths.

Furthermore, according to one or more embodiments of the laser scanning device, the light scanner may comprise a reflecting mirror, for example having a reflective surface on at least one surface thereof. In such a case, the light source may be configured to emit a laser light incident to said at least one surface of the reflecting mirror. According to one or more embodiments of the laser scanning device, the light scanner may comprise a reflecting mirror having a reflective surface on a front surface thereof and a reflective surface on a back surface thereof. According to one or more embodiments of the laser scanning device, when the light scanner comprises a reflecting mirror, the laser light source may be configured to emit the laser light so that a portion of the laser light is incident to the front surface of the reflecting mirror and another portion of the laser light is incident to the back surface of the reflecting mirror.

Furthermore, according to one or more embodiments, the laser scanning device may further comprise a light guide portion configured to branch the laser light emitted from the laser light source and guide it to the light scanner.

Furthermore, according to one or more embodiments of the laser scanning device, a scanning range by the light scanner of laser light passing through at least one optical path of a plurality of different optical paths may overlap with a portion of a scanning range by the light scanner of a laser light passing through another optical path of the plurality of different optical paths.

Furthermore, according to one or more embodiments of the laser scanning device, the reflecting mirror may be a cantilever-type MEMS mirror.

Furthermore, the laser scanning device according to one or more embodiments may comprise a plurality of laser light sources. According to one or more embodiments, a laser power of the laser lights emitted from each laser light source is modulated by different modulation signals.

Furthermore, the laser scanning device according to one or more embodiments may further comprise a light detector configured to detect light of the laser light scanned by the light scanner reflected and returned by the object to which a distance is to be measured.

According to one or more embodiments of the present invention, laser lights are incident to the light scanner from a plurality of directions. The laser lights incident from each optical path may be scanned, respectively, by the light scanner. Therefore, a plurality of different ranges may be scanned simultaneously. Because of this, even if the mirror displacement is small, by combining all of the scanning ranges from the light incident from a plurality of directions, a wide field may be scanned.
One or more embodiments of the present invention provide a method for measuring a distance to an object. The method may comprise emitting a laser light and scanning the emitted laser light by means of a light scanner, the laser light being emitted incident to the light scanner from a plurality of directions.
Embodiments of the laser scanning device and of the method are defined in the dependent claims.

### [Brief Description of the Drawings]

FIG. 1 is a functional block diagram illustrating a laser scanning device according to one or more embodiments of the present invention.
FIG. 2 is a diagram illustrating a first example of a configuration of a light scanner according to one or more embodiments of the present invention.
FIG. 3 is a diagram illustrating a second example of a configuration of a light scanner according to one or more embodiments of the present invention.
FIG. 4 is a schematic diagram illustrating a scanning range of a laser scanning device according to one or more embodiments of a first example of the present invention.
FIG. 5 is a schematic diagram illustrating a scanning range of a laser scanning device according to one or more embodiments of a second example of the present invention.
FIG. 6 is a schematic diagram illustrating the incident direction and reflection direction of light on a MEMS mirror according to one or more embodiments of the second example of the present invention.
FIG. 7 is a schematic diagram illustrating a scanning range of a laser scanning device according to one or more embodiments of a third example of the present invention.
FIG. 8 is a schematic diagram illustrating a scanning range of a laser scanning device according to one or more embodiments of a fourth example of the present invention.
FIG. 9 is a schematic diagram illustrating the incident direction and reflection direction of light on a MEMS mirror according to one or more embodiments of the fourth example of the present invention.
FIG. 10 is a schematic diagram illustrating a scanning range of a laser scanning device according to one or more embodiments of a fifth example of the present invention.
FIG. 11 is a schematic diagram illustrating the incident direction and reflection direction of light on a MEMS mirror according to one or more embodiments of the fifth example of the present invention.
FIG. 12 is a schematic diagram illustrating a scanning range of a laser scanning device according to one or more embodiments of a sixth example of the present invention.
FIG. 13 is a schematic diagram illustrating the incident direction and reflection direction of light on a MEMS mirror according to one or more embodiments of the sixth example of the present invention.
FIG. 14 is a schematic diagram illustrating a scanning range of a laser scanning device according to one or more embodiments of a seventh example of the present invention.
FIG. 15 is a schematic diagram illustrating the incident direction and reflection direction of light on a MEMS mirror according to one or more embodiments of the seventh example of the present invention.

### [Detailed Description of Embodiments]

### <First Example>

Embodiments of a laser scanning device of the present invention are described below with reference to the drawings.

The present example, as well as subsequent examples, represents various embodiments of a laser scanning device of the present invention. The present invention is not limited to these exemplary laser scanning devices, but is equally applicable to laser scanning devices of other examples included within the scope of claims.

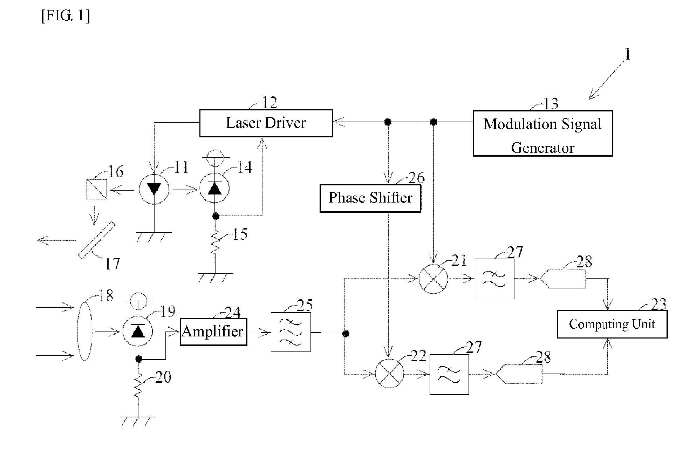

FIG. 1 is a functional block diagram illustrating a laser scanning device of one or more embodiments of the present example. According to one or more embodiments, a laser scanning device 1 comprises a light source 11 and a light scanner 17 configured to scan a laser light emitted from the laser light source 11. The light source 11 is configured to emit the laser light so that the laser light is incident to the light scanner 17, an example of which is described hereinafter, from a plurality of directions. In the example shown in Fig. 1, the laser scanning device 1 further comprises a laser driver 12 that drives the laser light source 11, a modulation signal generator 13 that supplies a modulation signal (modulation frequency signal) to the laser driver 12, a first light detector 14 that detects the light emitted from the laser light source 11, a first resistor 15 connected in series to the first light detector 14 and to the ground, a light guide portion 16 that guides the light emitted from the laser light source 11 to the light scanner 17, a condensing lens 18 that condenses the light emitted from the laser light source 11 reflected and returned by an object to which a distance is to be measured, a second light detector 19 that detects the reflected light condensed by the condensing lens 18, a second resistor 20 connected in series to the second light detector 19 and also to the ground, a first mixer 21, a second mixer 22, and a computing unit 23.

According to one or more embodiments, the laser driver 12 may be supplied with a modulation signal from the modulation signal generator 13 and may control the emission power of the laser light source 11 according to the modulation signals. The light emitted from the laser light source 11 is incident to the first light detector 14 and to the light guide portion 16. The first light detector 14 uses photoelectric conversion means to output an electrical physical quantity according to an amount of light of a photodiode, phototransistor, photomultiplier tube, and the like. When the light emitted from the laser light source 11 is incident to the first light detector 14, a photoelectric conversion current is output, and the current is converted to voltage by the first resistor 15.

Instead of the resistor 15, current-to-voltage conversion means, such as a transimpedance amplifier or the like, may be employed to output voltage according to current.

The light guide portion 16 may be any device supplying at least a portion of the light emitted from the laser light source 11 to the light scanner 17 and supplying to the condenser lens 18 at least a portion of the light emitted from the laser light source 11 reflected and returned by an object to the light scanner 17. For example, the light guide portion 16 may comprise a half mirror, a beam splitter, or the like (hereinafter, the "light guide portion 16" may at times be referred to as a "half mirror 16", the half mirror being an example of light guide portion).

According to one or more embodiments, the light scanner 17 comprises a reflective surface configured to scan by reflecting the light emitted from the laser light source 11 that is incident thereto. For example, the light scanner 17 may comprise a MEMS mirror (hereinafter, the "light scanner 17" may at times be referred to as a "MEMS mirror 17", the MEMS mirror being an example of light scanner). Although in the following reference is made to a light scanner comprising a MEMS mirror, other types of light scanner may be used. The MEMS mirror 17 may change inclination, and the angle at which the laser light reflected by the MEMS mirror is scanned (the scanning range) may be determined according to a variable range of the angle (*i.e.,* the inclination angle) of the MEMS mirror 17.

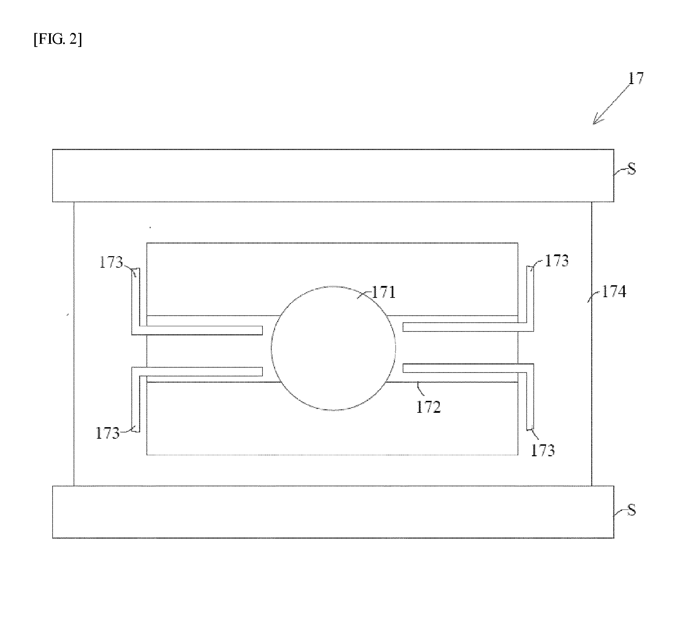

A method to change the angle of the MEMS mirror 17 may comprise using a piezoelectric element, such as for example a conventionally known piezo element. For example, the MEMS mirror 17, as illustrated in FIG. 2, includes a mirror 171, a support bar 172 that supports the mirror 171 from both sides with the ability to swing, four piezo elements 173 arranged on the support bar 172, and a support frame 174 that supports the support bar 172. In this configuration, alternately applying the voltage of differing phases of each piezo element allows the mirror 171 to swing clockwise or counterclockwise using the support bar 172 as an axis. Both ends of the support frame 174 are supported at both ends by a support body S.

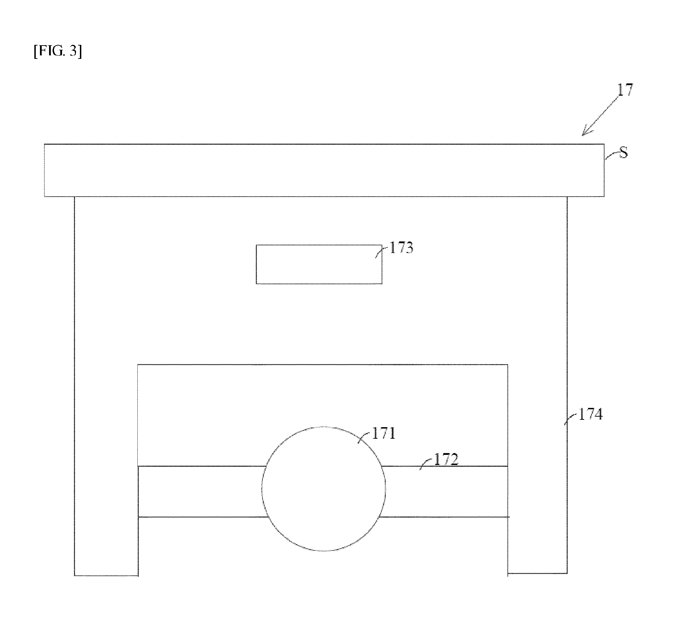

Although FIG. 2 illustrates an example of a type of MEMS mirror 17 held at both ends, the invention is not limited to this example, and a cantilever-type MEMS mirror as illustrated in FIG. 3 may be used. Using a cantilever-type mirror allows the support frame 174 to be configured so as to not entirely enclose the perimeter of the mirror 171, thereby reducing the amount of light shielded by the support frame 174 and the support body S thereof. Furthermore, the method to change the angle of the MEMS mirror 17 may not be based on a piezoelectric effect but may comprises changing electromagnetic induction or an electrostatic force.

Returning to FIG. 1, according one or more embodiments, the second light detector 19 may comprise a photodiode. The second light detector 19, like the first light detector 14, uses photoelectric conversion means to output an electrical physical quantity according to the amount of light (hereinafter, the "second light detector 19" may at times be referred to as a "photodiode 19", the photodiode being an example of second light detector). However, because a small amount of reflected light reflects on the object and is incident to the second light detector 19 compared to the light emitted from the laser light source 11 incident to the first light detector 14, a PIN photodiode, an avalanche photodiode, or other a high sensitivity photodiode, for example, may be used.

According to one or more embodiments, when the reflected light is incident to the second light detector 19, it is photoelectrically converted and a current is output, and the current is converted to voltage by the second resistor 20. The voltage converted by the second resistor 20 may be supplied to the first mixer 21 and the second mixer 22 through an amplifier 24 and a band-pass filter 25. Hereinafter, the "signal that is input to the first mixer 21 and the second mixer 22" may at times be referred to as an "output signal of the second light detector 19".

According to one or more embodiments, the first mixer 21 multiplies the output signal of the second light detector 19 and the output signal of the modulation signal generator 13. The second mixer 22 multiplies the output signal of the second light detector 19 and the output signal of the modulation signal generator 13 that has been phase shifted of 90° by a phase shifter 26. The output signal of the first mixer 21 and the output signal of the second mixer 22 are input into the computing unit 23 through a low-pass filter 27 and an AD converter 28, respectively. The computing unit 23, using the output signal of the first mixer 21 (signal Q) and the output of the signal of the second mixer 22 (signal I) to compute tan⁻¹ (Q/I), calculates the phase difference between the output signal of the modulation signal generator 13 and the output signal of the second light detector 19, and calculates (and thus measures) the distance to the object based on the calculation result of this phase difference. This type of detection method is per se widely known as quadrature detection.

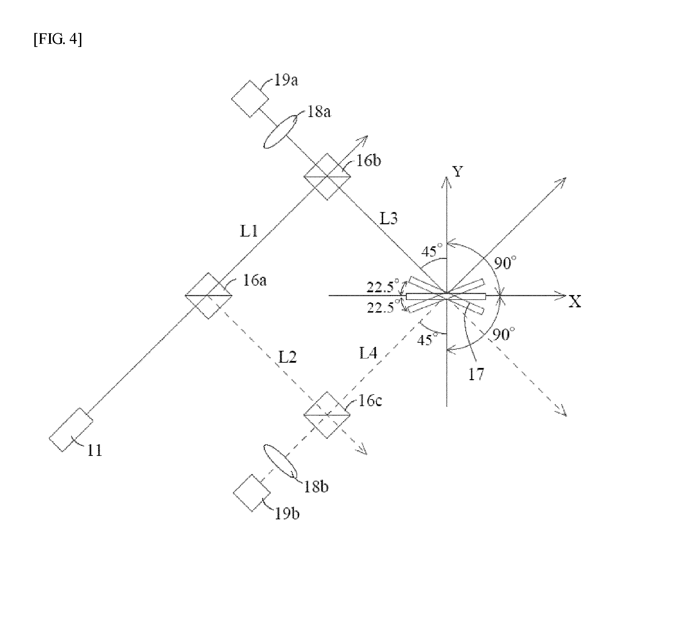

A scanning range of the laser scanning device 1 according to one or more embodiments of the present example will be described below with reference to FIG. 4. FIG. 4 is a schematic diagram illustrating the scanning range of the laser scanning device 1 of the present example. According to one or more embodiments of the present example, the laser scanning device 1 includes one laser light source 11, and reflective surfaces are formed on the front surface and the back surface of the MEMS mirror 17.

According to one or more embodiments, a portion of the light emitted from the laser light source 11 is transmitted through a first half mirror 16a (hereinafter, the light that is transmitted through the first half mirror 16a is referred to as "L1") and the remaining portion is reflected (hereinafter, the light that is reflected by the first half mirror 16a is referred to as "L2"). In other words, according to one or more embodiments of the present example, the first half mirror 16a splits the light emitted from the laser light source 11 into two beams and configures a portion of the optical path that guides the two split beams to the MEMS mirror 17.

According to one or more embodiments, the light L1 is incident to a second half mirror 16b, and a portion is reflected and is incident to the MEMS mirror 17 (hereinafter, the light reflected by the second half mirror 16b is referred to as "L3"). The light L2 is incident to a third half mirror 16c of the light guide portion 16, and a portion is reflected and is incident to the MEMS mirror 17 (hereinafter, the light reflected by the third half mirror 16c is referred to as "L4").

The MEMS mirror 17, for example, as illustrated in FIG. 4, may change the inclination angle from 0° (parallel to the x-axis) within a range of ±22.5°, and when the MEMS mirror 17 is parallel to the x-axis, the light L3 is incident to the front surface of the MEMS mirror 17, and the light L4 is incident to the back surface of the MEMS mirror 17, such that the respective incident angles are 45°. Accordingly, the scanning range according to the light L3 in conjunction with the angle adjustment of the MEMS mirror 17 is a range from 0° to 90°, and the scanning range according to the light L4 in conjunction with the angle adjustment of the MEMS mirror 17 is a range from 0° to -90°.

As a consequence, scanning is performed such that the light emitted from the laser light source 11 is incident to the MEMS mirror 17 via two different optical paths so that the range becomes twice as wide (180° in the present example) as when scanning is performed by a scanning range in which the light emitted from the laser light source 11 is incident via one optical path. Furthermore, the lights L3 and L4 reflected by the MEMS mirror 17 are reflected in different directions from the third half mirror 16c and the second half mirror 16b, respectively (a half mirror does not exist in the scanning direction). Therefore, the reflection directions of the lights L3 and L4 may be a horizontal direction (an in-plane direction parallel to the XY-plane), and scanning may be performed in the horizontal direction.

According to one or more embodiments, the lights L3 and L4 are reflected by the object, and a portion of the diffused reflected light returns back and is incident to the front surface or the back surface of the MEMS mirror 17, and a portion of the light that is incident to the MEMS mirror 17 is transmitted through the second half mirror 16b and the third half mirror 16c, respectively. The lights are transmitted through the second half mirror 16b and the third half mirror 16c, are condensed by a first condenser lens 18a and a second condenser lens 18b, and are incident to a first photodiode 19a and a second photodiode 19b.

According to one or more embodiments of the present example, the light emitted from the laser light source is incident to the light scanner via two different optical paths, *i.e.,* the light emitted from the laser light source is incident from two directions with respect to the light scanner. As a consequence, the scanning range based on the light emitted from the laser light source via one optical path (incident from a first direction) and the scanning range based on the light emitted from the laser light source via the other optical path (incident from a second direction that is different from the first direction) are combined to become the overall scanning range of the device that may scan with a wide range.

According to one or more embodiments, when the MEMS mirror 17 is a cantilever-type MEMS mirror such as the mirror illustrated in FIG 3, the side without the support frame 174 (the bottom side in FIG. 3) may be disposed to face the positive direction of the x-axis in FIG. 4. This is because if the support frame existed in the positive direction of the x-axis, the rays reflected in the positive direction of the x-axis direction (0°) would be blocked by the support frame, thereby generating a restriction in the detection range. Therefore, it is desirable to dispose the support frame such that it does not come into the direction that the laser light scans.

Furthermore, because the front surface and the back surface of the light scanner have reflective surfaces and the light emitted from the laser light source is incident to the reflective surface of each surface, in-plane scanning becomes possible on the same or similar plane in the horizontal direction.

### <Second Example>

The laser scanning device 1 according to one or more embodiments of the first example of the present invention includes one laser light source 11 and a light scanner comprising a MEMS mirror 17 including reflective surfaces formed on the front surface and back surface of the MEMS mirror 17. However, according to one or more embodiments of the laser scanning device 1 of the present example, the laser scanning device may include one laser light source 11, and a light scanner comprising a MEMS mirror 17 including a reflective surface formed only on the front surface of the MEMS mirror 17. According to one or more embodiments, a reflective surface may be formed only on the back surface of the MEMS mirror 17. According to one or more embodiments, reflective surfaces may be formed both on the front surface and on the back surface of the MEMS mirror 17.

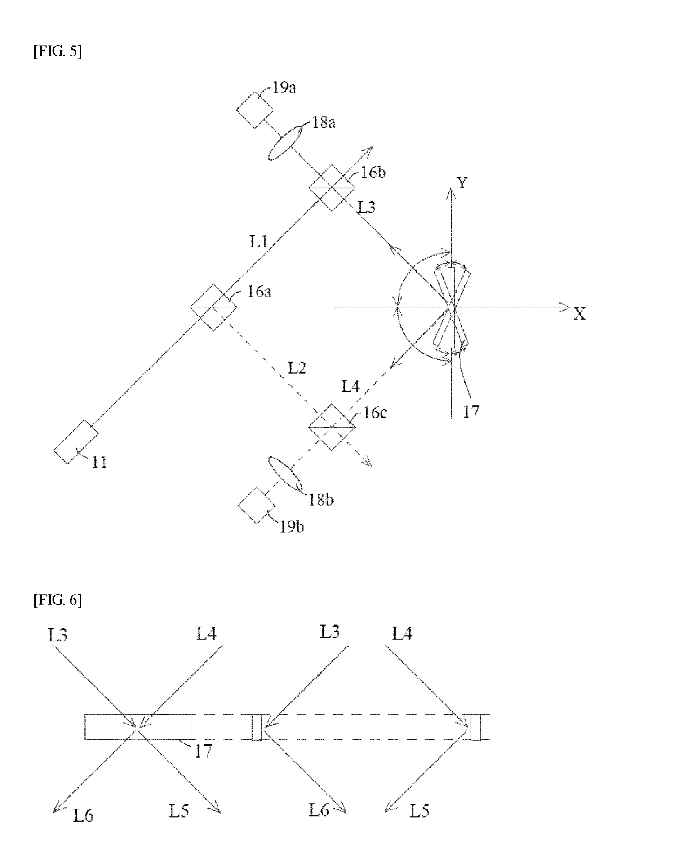

A scanning range of the laser scanning device 1 according to one or more embodiments of the present example will be described below with reference to FIG. 5 and FIG. 6. FIG. 5 is a schematic diagram illustrating the scanning range of the laser scanning device 1 according to one or more embodiments of the present example. FIG. 6 is a schematic diagram illustrating an incident direction and a reflection direction of the light on the MEMS mirror 17 of the laser scanning device 1 according to one or more embodiments of the present example. FIG. 6 illustrates an incident direction and a reflection direction of the light in a front view, a left side view, and a right side view of the MEMS mirror 17 (from left to right, in such figure).

According to one or more embodiments, a portion of the light emitted from the laser light source 11 is transmitted through the first half mirror 16a of the light guide portion 16 (hereinafter, the light that is transmitted through the first half mirror 16a is referred to as "L1") and the remaining portion is reflected (hereinafter, the light that is reflected by the first half mirror 16a is referred to as "L2"). The light L1 is incident to a second half mirror 16b of the light guide portion 16, and a portion is reflected and is incident to the MEMS mirror 17 (hereinafter, the light reflected by the second half mirror 16a is referred to as "L3"). The light L2 is incident to a third half mirror 16c of the light guide portion 16, and a portion is reflected and is incident to the MEMS mirror 17 (hereinafter, the light reflected by the third half mirror 16c is referred to as "L4").

The MEMS mirror 17, for example, as illustrated in FIG. 5, may change the inclination angle from 90° (parallel to the y-axis) within a range of ±22.5°, and when the MEMS mirror 17 is parallel to the y-axis, the lights L3 and L4 are incident so that the respective angles incident to the front surface of the MEMS mirror 17 are of 45°. Accordingly, the scanning range according to the light L3 in conjunction with the angle adjustment of the MEMS mirror 17 is a range from 90° to 180°, and the scanning range according to the light L4 in conjunction with the angle adjustment of the MEMS mirror 17 is a range from 180° to 270°.

As a consequence, scanning is performed such that the light emitted from the laser light source 11 is incident to the MEMS mirror 17 via two different optical paths so that the scanning range becomes wider (180° in the present example) than when scanning is performed by a scanning range in which the light emitted from the laser light source 11 is incident via one optical path.

According to one or more embodiments, when the incident directions of the lights L3 and L4 with respect to the MEMS mirror 17 are in the horizontal direction, the reflection direction also becomes horizontal and the two optical paths may spatially interfere with each other to generate an impossible region. Further, if a half mirror exists in the scanning direction, a ray from a different optical path may transmit through the half mirror and become incident to the photodiode, potentially resulting in an erroneous measurement. Therefore, according to one or more embodiments of the present example, having L3 and L4 incident to the MEMS mirror 17 from a direction oblique from above as illustrated in FIG. 6 allows optical components, such as a half mirror or lens, or a laser and photodiode, to be eliminated in the scanning direction of the laser light source. With this configuration, the scanning direction may be made to be peripherally downward to enable detection, for example, of an obstacle that exists in front of and lower than a walking assistance vehicle. According to one or more embodiments of the present example, the lights L3 and L4 reflected by the MEMS mirror 17 are referred to as L5 and L6, respectively.

According to one or more embodiments of the present example, the lights L3 and L4 are made to be incident to the MEMS mirror 17 from a direction oblique from above. However, the invention is not limited to this and the lights L3 and L4 may be made to be incident from a direction oblique from below to make a scanning range that is peripherally upward.

According to one or more embodiments, the lights L5 and L6 are reflected by the object, a portion of the diffused reflected light is again incident to the MEMS mirror 17, and a portion of the light incident to the MEMS mirror 17 is transmitted through the second half mirror 16b and the third half mirror 16c, respectively. The light that is transmitted through the second half mirror 16b and third half mirror 16c is condensed by the first condenser lens 18a and the second condenser lens 18b and is incident to the first photodiode 19a and the second photodiode 19b.

According to one or more embodiments of the present example, the light emitted from the laser light source is incident to the light scanner via two different optical paths, i.e. the emitted light of the laser light source is incident from two directions with respect to the light scanner. As a consequence, the scanning range based on the light emitted from the laser light source via one optical path and the scanning range based on the light emitted from the laser light source via the other optical path become the overall scanning range of the device that may scan across a wide range.

Furthermore, when there is a reflective surface on one surface of the light scanner, for example on the front surface or on the back surface thereof, and the light emitted from the laser light source is made to be incident to the reflective surface and is incident from a direction oblique from above or a direction oblique from below, a conical scan in the lower direction or the upper direction is possible.

### <Third Example>

The laser scanning device 1 according to one or more embodiments of the first example and the second example of the present invention are provided with one laser light source 11. However, according to one or more embodiments of the present example, the laser scanning device 1 may include two laser light sources 11. Reflective surfaces may be formed on the front surface and the back surface of the MEMS mirror 17.

According to one or more embodiments, a modulation signal generator 13 supplies differing modulation signals to a laser driver 12 for the light emitted from each laser light source 11a, 11b, and the laser driver 12 controls the emission of each of the laser light sources 11 a, 11b based on the differing modulation signals. Making the frequencies of the lights emitted from the laser light sources 11 a, 11b to be different frequencies prevents erroneous measurements based on such light of an emitted light or a reflected light of the other laser light source being incident to the photodiodes 19a, 19b that correspond to each laser light source 11a, 11b.

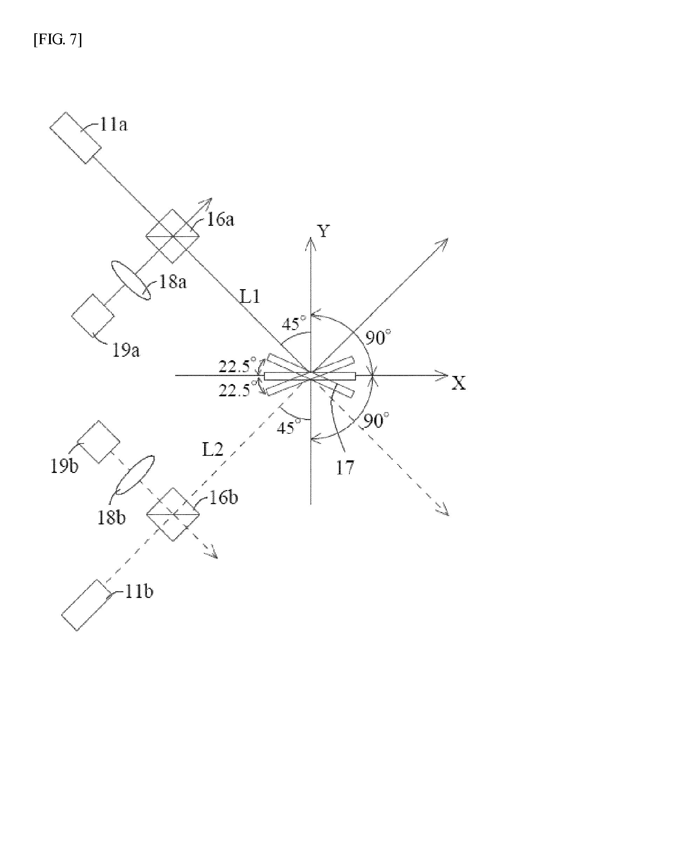

A scanning range of the laser scanning device 1 according to one or more embodiments of the present example will be described below with reference to FIG. 7. FIG. 7 is a schematic diagram illustrating a scanning range of the laser scanning device 1 according to one or more embodiments of the present example.

According to one or more embodiments, a portion of the light emitted from the laser light source 11a is transmitted through the first half mirror 16a (hereinafter, the light that is transmitted through the first half mirror 16a is referred to as "L1") and is incident to the MEMS mirror 17. Furthermore, a portion of the light emitted from the laser light source 11b is transmitted through the second half mirror 16b (hereinafter, the light that is transmitted through the second half mirror 16b is referred to as "L2") and is incident to the MEMS mirror 17.

The MEMS mirror 17, for example, as illustrated in FIG. 7, may change the inclination angle from 0° (parallel to the x-axis) within a range of ±22.5°, and when the MEMS mirror 17 is parallel to the x-axis, the light L1 is incident to the front surface of the MEMS mirror 17, and the light L2 is incident to the back surface of the MEMS mirror 17, such that the respective incident angles are 45°. Accordingly, the scanning range according to the light L1 in conjunction with the angle adjustment of the MEMS mirror 17 is a range from 0° to 90°, and the scanning range according to the light L2 in conjunction with the angle adjustment of the MEMS mirror 17 is a range from 0° to -90°.

As a consequence, scanning is performed such that the lights emitted from the laser light sources 11a and 11b are incident to the MEMS mirror 17 via two different optical paths so that the range becomes twice as wide (180° in the present example) as when scanning is performed by a scanning range in which the light emitted from the laser light source 11 is incident via one optical path. Furthermore, the lights L1 and L2 reflected by the MEMS mirror 17 are reflected in different directions from the second half mirror 16b and the first half mirror 16a, respectively (a half mirror does not exist in the scanning direction). Therefore, the reflection directions of L1 and L2 may be a horizontal direction, and scanning can be performed in the horizontal direction. Furthermore, providing light via different optical paths as light emitted from different laser light sources simplifies the structure of the optical paths.

According to one or more embodiments, the lights L1 and L2 are reflected by the object, a portion of the diffused reflected light returns back and is incident to the front surface or the back surface of the MEMS mirror 17, and a portion of the light incident to the MEMS mirror 17 is reflected by the first half mirror 16a and the second half mirror 16b, respectively. The lights reflected by the first half mirror 16a and the second half mirror 16b are condensed by the first condenser lens 18a and the second condenser lens 18b, and are incident to the first photodiode 19a and the second photodiode 19b.

According to one or more embodiments of the present example, a result similar to the first example is produced. In addition, light that travels along differing optical paths uses light emitted from differing laser light sources. Moreover, the light emitted from each laser light source is mutually modulated based on modulation signals that differ in frequency or cycle, and the respective modulation signals are used for quadrature detection of the signal received by the photodiode to prevent interference that occurs when reflected lights mix from different optical paths, Since a multiplier or low-pass filter that configures quadrature detection acts as a narrow range band-pass filter, other modulation frequencies may be eliminated. Through this method, erroneous measurements related to the position of the object may be prevented.

For example, if f1 is the modulation frequency of the laser light source 11a of the optical path of the front surface side of the MEMS mirror 17, f2 is the modulation frequency of the laser light source 11b of the optical path of the back surface side of the MEMS mirror 17, and fc is the passband of the low-pass filter in a quadrature detector, the quadrature detectors act at f1±fc, f2±fc respectively, and the frequency interval between f1 and f2 is raised to 2fc or more, mutual interference may be suppressed. According to one or more embodiments of the present example, the lights emitted from the laser light sources are incident to the light scanner by two different optical paths. In short, the scanning range based on the light emitted from the laser light source that travels an optical path in one direction, and the scanning range based on the light emitted from the laser light source that travels an optical path in the other direction are combined and become the scanning range of the entire device, and scanning with a wide range is possible.

According to one or more embodiments, when the MEMS mirror 17 comprises a cantilever-type MEMS mirror such as the mirror illustrated in FIG. 3, the side without the support frame 174 (the bottom side in FIG. 3) is disposed to face the positive direction of the x-axis in FIG. 7. This is because if the support frame existed in the positive direction of the x-axis, the rays reflected in the positive direction of the x-axis direction (0°) would be blocked by the support frame, thereby generating a restriction in the detection range. Therefore, it is desirable to dispose the support frame such that it does not come into the direction that the laser light scans.

### <Fourth Example>

According to one or more embodiments of the above third example of the present invention, the laser scanning device 1 may include two laser light sources 11 (11a, 11b), and reflective surfaces are formed on the front surface and the back surface of the MEMS mirror 17. However, according to one or more embodiment, the laser scanning device 1 may include two laser light sources 11, and a reflective surface may be formed only on the front surface of the MEMS mirror 17. According to one or more embodiment, a reflective surface may be formed only on the back surface of the MEMS mirror 17.

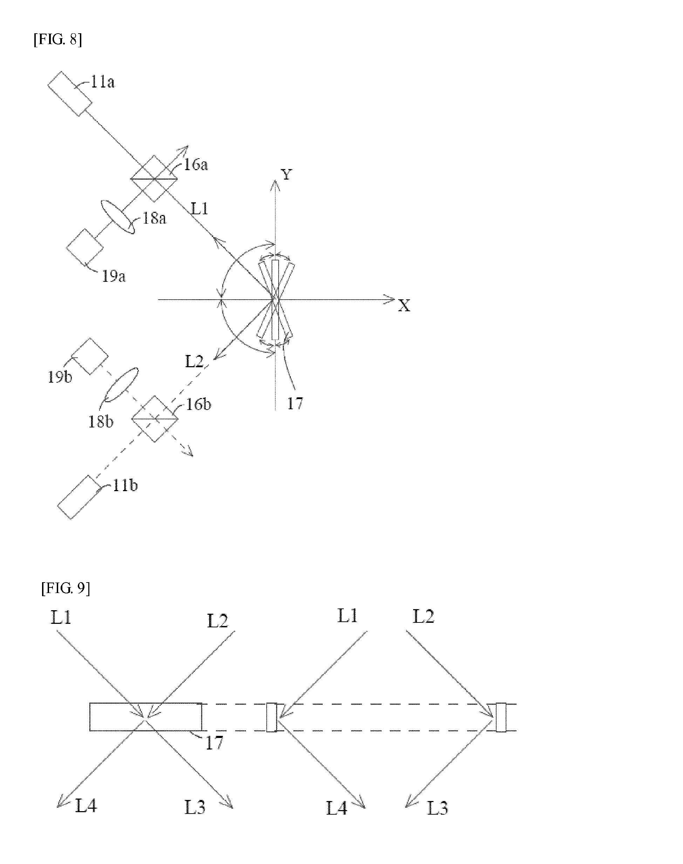

A scanning range of the laser scanning device 1 according to one or more embodiments of the present example will be described below with reference to FIG. 8 and FIG. 9. FIG. 8 is a schematic diagram illustrating the scanning range of the laser scanning device 1 according to one or more embodiments of the present example. FIG. 9 is a schematic diagram illustrating the incident direction and reflection direction of the beams at the MEMS mirror 17 according to one or more embodiments of the present example. FIG. 9 illustrates an incident direction and a reflection direction of the light in a front view, a left side view, and a right side view of the MEMS mirror 17 (from left to right, in such figure).

According to one or more embodiments, a portion of the light emitted from the laser light source 11a is transmitted through the first half mirror 16a (hereinafter, the light that is transmitted through the first half mirror 16a is referred to as "L1"), and is incident to the MEMS mirror 17. Furthermore, a portion of the light emitted from the laser light source 11b is transmitted through the second half mirror 16b (hereinafter, the light that is transmitted through the second half mirror 16b is referred to as "L2"), and is incident to the MEMS mirror 17.

The MEMS mirror 17, for example, as illustrated in FIG. 8, may change the inclination angle from 90° (parallel to the y-axis) within a range of ±22.5°, and when the MEMS mirror 17 is parallel to the y-axis, the lights L1 and L2 are incident so that the respective angles incident to the front surface of the MEMS mirror 17 are 45°. Accordingly, the scanning range according to the light L1 in conjunction with the angle adjustment of the MEMS mirror 17 is a range from 90° to 180°, and the scanning range according to the light L2 in conjunction with the angle adjustment of the MEMS mirror 17 is a range from 180° to 270°.

As a consequence, scanning is performed such that the light emitted from the laser light source 11 is incident to the MEMS mirror 17 via two different optical paths so that the scanning range becomes wider (180° in the present example) than when scanning is performed by a scanning range in which the light emitted from the laser light source 11 is incident via one optical path.

According to one or more embodiments of the present example, the lights L1 and L2 reflected by the MEMS mirror 17 are reflected in the directions of the second half mirror 16b and the first half mirror 16a, respectively. In short, when the incident directions of the lights L1 and L2 with respect to MEMS mirror 17 are in the horizontal direction, the reflection direction also becomes horizontal and the two optical paths may spatially interfere with each other to generate an impossible region. Further, if a half mirror exists in the scanning direction, a ray from a different optical path may transmit through the half mirror and become incident to the photodiode potentially resulting in an erroneous measurement. Therefore, according to one or more embodiments of the present example, having the lights L1 and L2 incident to the MEMS mirror 17 from a direction oblique from above as illustrated in FIG. 6 allows optical components, such as a half mirror or lens, or a laser and photodiode to be eliminated in the scanning direction of the laser light source. With this configuration, the scanning direction may be made to be peripherally downward to enable detection, for example, of the existence of an obstacle that exists in front of and lower than a walking assistance vehicle. According to one or more embodiments of the present example, the lights L1 and L2 reflected by the MEMS mirror 17 are referred to as L3 and L4, respectively.

According to one or more embodiments of the present example, the lights L1 and L2 are made to be incident to the MEMS mirror 17 from a direction oblique from above, however, it is not limited to this and may be made to be incident from a direction oblique from below to make a scanning range that is peripherally upward.

Lights L3 and L4 are reflected by the object to which a distance is be measured, a portion of the diffused reflected light is again incident to the MEMS mirror 17, and a portion of the light incident to the MEMS mirror 17 is reflected by the first half mirror 16a and the second half mirror 16b, respectively. The light that is reflected by the first half mirror 16a and second half mirror 16b is condensed by the first condenser lens 18a and the second condenser lens 18b and is incident to the first photodiode 19a and the second photodiode 19b.

According to one or more embodiments of the present example, a result similar to the second example is produced. In addition, the lights that travel via the optical paths refer to the respective emitted lights of the laser light sources, moreover, by controlling the emitted lights of each laser light source based on the various modulation signals, erroneous measurements related to the position of the object to be measured are prevented as in the third example.

### <Fifth Example>

In the above first through fourth examples, the emitted light of one or two laser light sources 11 is incident, traveling via two different optical paths in reference to the MEMS mirror 17 and the scan is performed, yet the number of paths is not limited to this. By increasing the number of optical paths, the scanning range may be widened. According to one or more embodiments of the present example, the emitted light of one laser light source 11 is incident traveling four different optical paths with respect to the MEMS mirror 17 and scanning is performed. According to one or more embodiments of the present example and in the sixth example described hereinafter, the laser scanning device 1 includes a plurality of mirrors 29 that reflect light.

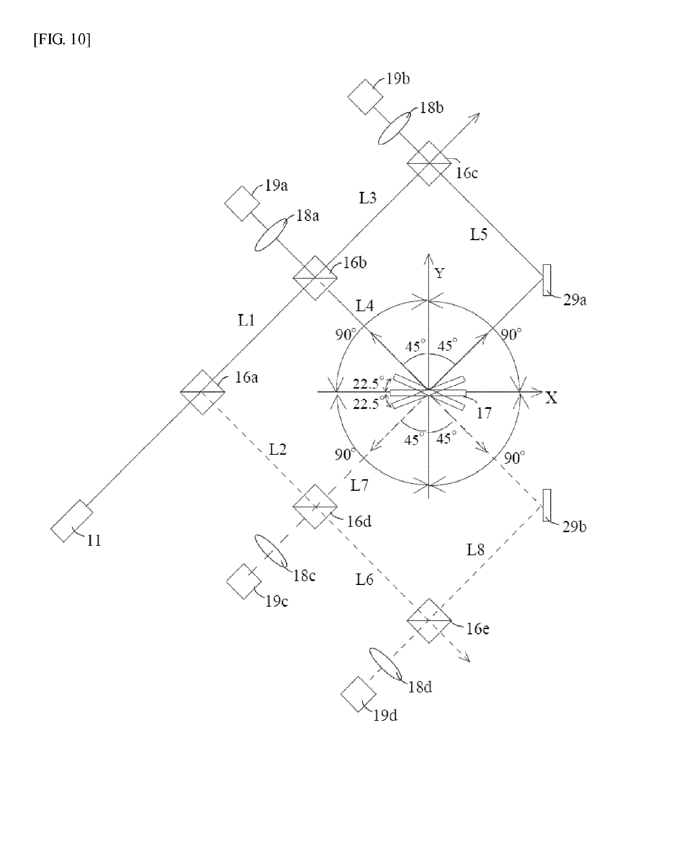

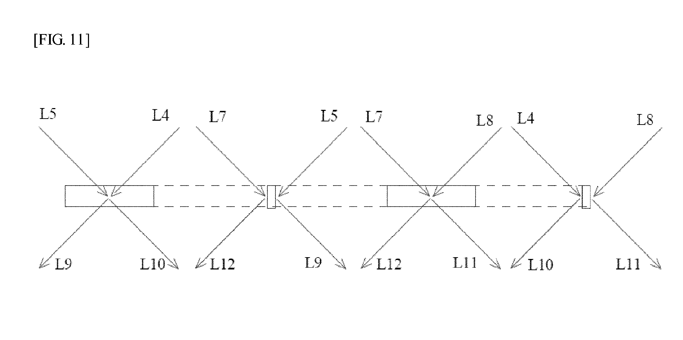

A scanning range of the laser scanning device 1 of one or more embodiments of the present example will be described below with reference to FIG. 10 and FIG. 11. FIG. 10 is a schematic diagram illustrating the scanning range of the laser scanning device 1 of one or more embodiments of the present example. FIG. 11 is a schematic diagram illustrating the incident direction and reflection direction of the light at the MEMS mirror 17 of one or more embodiments of the present example. FIG. 11 illustrates the incident direction and the reflection direction of the light in a front view, a left side view, and a right side view of the MEMS mirror 17 (from left to right, in such figure).

According to one or more embodiments, a portion of the light emitted from the laser light source 11 is transmitted through the first half mirror 16a (hereinafter, the light that is transmitted through the first half mirror 16a is referred to as "L1") and the remaining portion is reflected (hereinafter, the light that is reflected by the first half mirror 16a is referred to as "L2"). In other words, according to one or more embodiments of the present example, the first mirror 16a splits the emitted light of the laser light source 11 into two beams and configures a portion of the optical path that guides the two split beams to the MEMS mirror 17.

According to one or more embodiments, a portion of the light L1 is transmitted through the second half mirror 16b (hereinafter, the light that is transmitted through the second half mirror 16b is referred to as "L3") and the remaining portion is reflected (hereinafter, the light that is reflected by the second half mirror 16b is referred to as "L4"). L3 is incident to the third half mirror 16c and a portion is reflected (hereinafter, the light that is reflected by the third half mirror 16c is referred to as "L5"). The second half mirror 16b and a fourth half mirror 16d described hereinafter split the emitted light of the laser light source 11 into 2 beams and configure a portion of the optical path that guides the two split beams to the MEMS mirror 17 similar to the first mirror 16a.

According to one or more embodiments, a portion of L2 is transmitted through the fourth half mirror 16d (hereinafter, the light that is transmitted through the fourth half mirror 16d is referred to as "L6") and the remaining portion is reflected (hereinafter, the light that is reflected by the fourth half mirror is referred to as "L7"). L6 is incident to a fifth half mirror 16e and a portion is reflected (hereinafter, the light that is reflected by the fifth half mirror 16e is referred to as "L8"). L4 and L7 are incident to the MEMS mirror 17 and L5 and L8 are reflected by a first mirror 29a and a second mirror 29b and are then incident to the MEMS mirror 17.

The MEMS mirror 17, for example, as illustrated in FIG. 10, may change angles from 0° (parallel to the x-axis) within a range of ±22.5°, and when the MEMS mirror 17 is parallel to the x-axis, L4 and L5 are incident to the front surface of the MEMS mirror 17, and L7 and L8 are incident to the back surface of the MEMS mirror 17, such that the respective incident angles are 45°. Accordingly, the scanning range according to L4 in conjunction with the angle adjustment of the MEMS mirror 17 is a range from 0° to 90°, and the scanning range according to L5 in conjunction with the angle adjustment of the MEMS mirror 17 is a range from 90° to 180°. Furthermore, the scanning range according to L7 in conjunction with the angle adjustment of the MEMS mirror 17 is a range from 270° to 360°, and the scanning range according to L8 in conjunction with the angle adjustment of the MEMS mirror 17 is a range from 180° to 270°.

That is, scanning is performed such that the light emitted from the laser light source 11 is incident to the MEMS mirror 17 via four different optical paths so that the range becomes four times as wide (360° in the present example) as when scanning is performed by a scanning range in which the light emitted from the laser light source 11 is incident through one optical path.

According to one or more embodiments, when the incident directions of L4, L5, L7 and L8 with respect to the MEMS mirror 17 are in the horizontal direction, the reflection direction also becomes horizontal and the four optical paths may spatially interfere with one another to generate an impossible region. Further, if a half mirror exists in the scanning direction, a ray from a different optical path may transmit through the half mirror, and become incident to the photodiode potentially resulting in an erroneous measurement. Therefore, according to one or more embodiments of the present example, having L4, L5, L7, and L8 incident to the MEMS mirror 17 from a direction oblique from above as illustrated in FIG. 11 allows optical components, such as a half mirror or lens, or a laser and photodiode to be eliminated in the scanning direction of the laser light. With this configuration, the lower area may be scanned such that it is aligned with the side surfaces of a cone, for example, of the existence of an obstacle that exists in front of and lower than a walking assistance vehicle. The lights 11, L4, L5, L7, and L8 reflected by the MEMS mirror 17 are referred to as L9, L10, L11, and L12, respectively.

According to one or more embodiments of the present example, the lights L4, L5, L7, and L8 are made to be incident to the MEMS mirror 17 from a direction oblique from above, however, it is not limited to this and may be made to be incident from a direction oblique from below to make a scanning range that is peripherally upward.

According to one or more embodiments, the lights L9, L10, L11 and L12 are reflected by the object to be measured, a portion of the diffused reflected light is again incident to the MEMS mirror 17, and a portion of the light incident to the MEMS mirror 17 is transmitted through the second half mirror 16b, the third half mirror 16c, the fourth half mirror 16d, and the fifth half mirror 16e, respectively. The light that is transmitted through the second half mirror 16b, the third half mirror 16c, the fourth half mirror 16d, and the fifth half mirror 16e is condensed by the first condenser lens 18a, the second condenser lens 18b, the third condenser lens 18c, and the fourth condenser lens 18d and is incident to the first photodiode 19a, the second photodiode 19b, the third photodiode 19c, and the fourth photodiode 19d.

With one or more embodiments of the present example, the emitted light of the laser light source is incident to the light scanner via four different optical paths. That is, the scanning range based on the emitted lights of the laser light sources via each optical path becomes the overall scanning range of the device that may scan across a wide range.

Furthermore, according to one or more embodiments, when the light emitted from the laser light source is incident to the reflective surface of the front surface or back surface of the light scanner, it is incident from a direction oblique from above, or from a direction oblique from below, and therefore, a scan of the downward or the upward direction is possible.

### <Sixth Example>

In the above fifth example, scanning is performed by the emitted light of one laser light source 11 being incident to the MEMS mirror 17 via four different optical paths. However, according to one or more embodiments of the present example, a scan is performed by the emitted light of two laser light sources 11 being incident to the MEMS mirror 17 via four different optical paths.

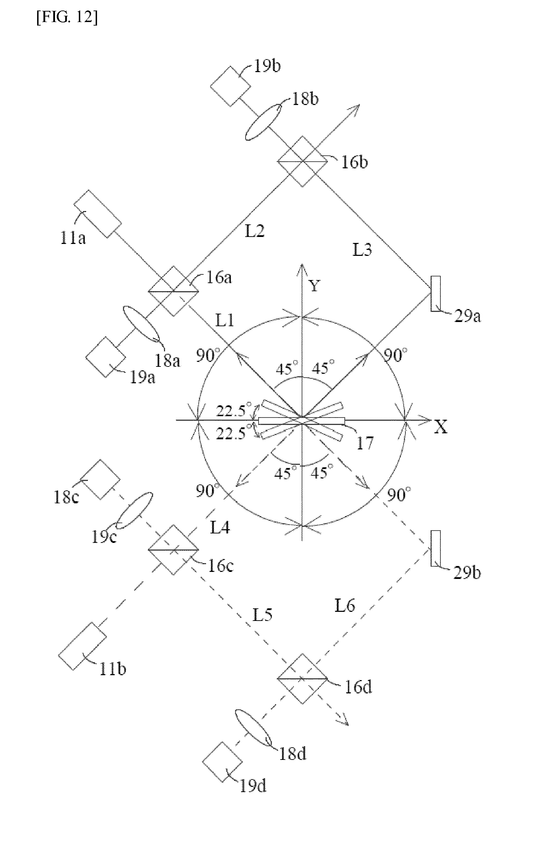

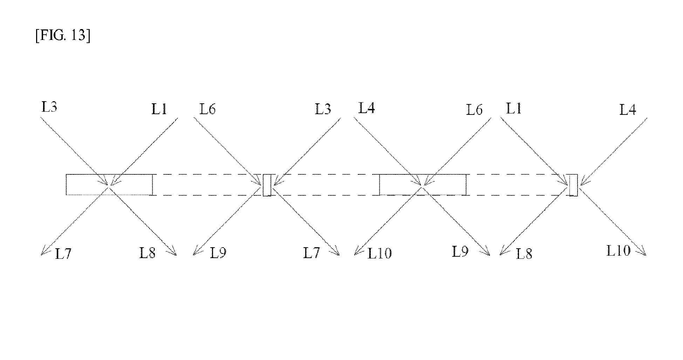

A scanning range of one or more embodiments of the laser scanning device 1 of the present example will be described below with reference to FIG. 12 and FIG. 13. FIG. 12 is a schematic diagram illustrating the scanning range of one or more embodiments of the laser scanning device 1 of the present example. FIG. 13 is a schematic diagram illustrating an incident direction and a reflection direction of the light on the MEMS mirror 17 of one or more embodiments of the present example. FIG. 13 illustrates an incident direction and a reflection direction of the light from the front view, the left side view, the back side view, and the right side view of the MEMS mirror 17 (from left to right, in such figure).

According to one or more embodiments, a portion of the light emitted from the laser light source 11a is transmitted through the first half mirror 16a (hereinafter, the light that is transmitted through the first half mirror 16a is referred to as "L1") and the remaining portion is reflected (hereinafter, the light that is reflected by the first half mirror 16a is referred to as "L2"). In other words, according to one or more embodiments of the present example, the first mirror 16a and a third half mirror 16c described hereinafter split the emitted light of the laser light source 11 into two beams and configure a portion of the optical path that guides the two split beams to the MEMS mirror 17. L2 is incident to the second half mirror 16b and a portion is reflected (hereinafter, the light that is reflected by the second half mirror 16b is referred to as "L3").

According to one or more embodiments, a portion of the light emitted from the laser light source 11b is transmitted through the third half mirror 16c (hereinafter, the light that is transmitted through the third half mirror 16c is referred to as "L4") and the remaining portion is reflected (hereinafter, the light that is reflected by the third half mirror 16c is referred to as "L5"). L5 is incident to a fourth half mirror 16e and a portion is reflected (hereinafter, the light that is reflected by the fourth half mirror 16e is referred to as "L6"). L1 and L4 are incident to the MEMS mirror 17 and L3 and L6 are reflected by the first mirror 29a and the second mirror 29b, respectively, and are then incident to the MEMS mirror 17.

The MEMS mirror 17, for example, as illustrated in FIG. 12, may change angles from 0° (parallel to the x-axis) within a range of ±22.5°, and when the MEMS mirror 17 is parallel to the x-axis, L1 and L3 are incident to the front surface of the MEMS mirror 17, and L4 and L6 are incident to the back surface of the MEMS mirror 17, such that the respective incident angles are 45°. Accordingly, the scanning range according to L1 in conjunction with the angle adjustment of the MEMS mirror 17 is a range from 0° to 90°, and the scanning range according to L3 in conjunction with the angle adjustment of the MEMS mirror 17 is a range from 90° to 180°. Furthermore, the scanning range according to L4 in conjunction with the angle adjustment of the MEMS mirror 17 is a range from 270° to 360°, and the scanning range according to L6 in conjunction with the angle adjustment of the MEMS mirror 17 is a range from 180° to 270°.

That is, scanning is performed such that the lights emitted from the laser light sources 11a, 11b are incident to the MEMS mirror 17 via four different optical paths so that the range becomes four times as wide (360° in the present example) as when scanning is performed by a scanning range in which the light emitted from the laser light source 11 is incident through one optical path.

According to one or more embodiments, when the incident directions of L1, L3, L4 and L6 with respect to the MEMS mirror 17 are in the horizontal direction, the reflection direction also becomes horizontal and the two optical paths may spatially interfere with each other to generate an impossible region. Further, if a half mirror exists in the scanning direction, a ray from a different optical path may transmit through the half mirror and become incident to the photodiode resulting in an erroneous measurement. Therefore, according to one or more embodiments of the present example, having L1, L3, L4, and L6 incident to the MEMS mirror 17 from a direction oblique from above as illustrated in FIG. 13 allows optical components, such as a half mirror or lens, or a laser and photodiode to be eliminated in the scanning direction of the laser light source. With this configuration, the scanning direction may be made to be peripherally downward to enable detection, for example, of the existence of an obstacle that exists in front of and lower than a walking assistance vehicle. The lights L1, L3, L4, and L6 reflected by the MEMS mirror 17 are made to be L7, L8, L9, and L10, respectively.

According to one or more embodiments of the present example, the lights L1, L3, L4, and L6 are made to be incident to the MEMS mirror from a direction oblique from above, however, it is not limited to this and may be made to be incident from a direction oblique from below to make a scanning range that is peripherally upward.

According to one or more embodiments, the lights L7, L8, L9 and L10 are reflected by the object, a portion of the diffused reflected light is again incident to the MEMS mirror 17, and a portion of the light incident to the MEMS mirror 17 is transmitted through the first half mirror 16a, the second half mirror 16b, the third half mirror 16c, and the fourth half mirror 16d, respectively. The light that is transmitted through the first half mirror 16a, the second half mirror 16b, the third half mirror 16c, and the fourth half mirror 16d is condensed by the first condenser lens 18a, the second condenser lens 18b, a third condenser lens 18c, and a fourth condenser lens 18d, and is incident to the first photodiode 19a, the second photodiode 19b, a third photodiode 19c, and a fourth photodiode 19d.

According to one or more embodiments of the present example, a result similar to the fifth example is produced. In addition, assuming the various lights that travel via the optical paths refer to the various emitted lights of the laser light source, moreover, by controlling the emitted light of each laser light source based on the various modulation signals, erroneous measurements related to the position of the object to be measured are prevented like in the third example.

### <Seventh Example>

In the above fifth example and sixth example, a scan is performed by the emitted light of one or two laser light sources 11 being incident to the MEMS mirror 17 via four different optical paths. However, in the present embodiment, a scan is performed by the emitted light of four laser light sources 11 being incident to the MEMS mirror 17 via four different optical paths.

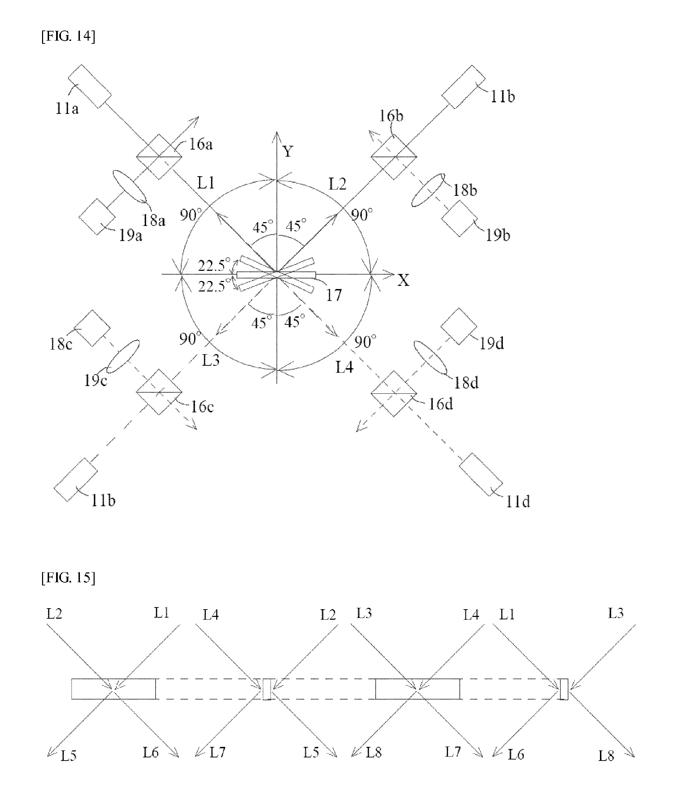

A scanning range of a laser scanning device according to one or more embodiments of the present example will be described below with reference to FIG. 14 and FIG. 15. FIG. 14 is a schematic diagram illustrating the scanning range of the laser scanning device 1 of one or more embodiments of the present example. FIG. 15 is a schematic diagram illustrating an incident direction and a reflection direction of the light on the MEMS mirror 17 of a laser scanning device according to one or more embodiments of the present example. FIG. 15 illustrates an incident direction and a reflection direction of the light from the front view, the left side view, the back side view, and the right side view of the MEMS mirror 17 (from left to right, in such figure).

According to one or more embodiments, a portion of the light emitted from the first laser light source 11a is transmitted through the first half mirror 16a (hereinafter, the light that is transmitted through the first half mirror 16a is referred to as "L1") and is incident to the MEMS mirror 17. Furthermore, a portion of the emitted light from the second laser light source 11b is transmitted through the second half mirror 16b (hereinafter, the light that is transmitted through the second half mirror 16b is referred to as "L2") and is incident to the MEMS mirror 17. A portion of the emitted light from the third laser light source 11c is transmitted through the third half mirror 16c (hereinafter, the light that is transmitted through the third half mirror 16c is referred to as "L3") and is incident to the MEMS mirror 17. Furthermore, a portion of the light emitted from the fourth laser light source 11d is transmitted through the second half mirror 16d (hereinafter, the light that is transmitted through the fourth half mirror 16d is referred to as "L4") and is incident to the MEMS mirror 17.

The MEMS mirror 17, for example, as illustrated in FIG. 14, may change angles from 0° (parallel to the x-axis) within a range of ±22.5°, and when the MEMS mirror 17 is parallel to the x-axis, L1 and L2 are incident to the front surface of the MEMS mirror 17, and L3 and L4 are incident to the back surface of the MEMS mirror 17, such that the respective incident angles are 45°. Accordingly, the scanning range according to L1 in conjunction with the angle adjustment of the MEMS mirror 17 is a range from 0° to 90°, and the scanning range according to L2 in conjunction with the angle adjustment of the MEMS mirror 17 is a range from 90° to 180°. Furthermore, the scanning range according to L3 in conjunction with the angle adjustment of the MEMS mirror 17 is a range from 270° to 360°, and the scanning range according to L4 in conjunction with the angle adjustment of the MEMS mirror 17 is a range from 180° to 270°.

That is, scanning is performed such that the lights emitted from the laser light sources 11 (11a to 11d) are incident to the MEMS mirror 17 via four different optical paths so that the range becomes four times as wide (360° in the present example) as when scanning is performed by a scanning range in which the light emitted from the laser light source 11 is incident through one optical path.

According to one or more embodiments, when the incident directions of L1 to L4 with respect to the MEMS mirror 17 are in the horizontal direction, the reflection direction also becomes horizontal and the two optical paths may spatially interfere with each other to generate an impossible region. Further, if a half mirror exists in the scanning direction, a ray from a different optical path may transmit through the half mirror and become incident to the photodiode resulting in an erroneous measurement. Therefore, according to one or more embodiments of the present example, having L1 to L4 incident to the MEMS mirror 17 from a direction oblique from above as illustrated in FIG. 11 allows optical components, such as a half mirror or lens, or a laser and photodiode to be eliminated in the scanning direction of the laser light source. With this configuration, the scanning direction may be made to be peripherally downward to enable detection, for example, of the existence of an obstacle that exists in front of and lower than a walking assistance vehicle. According to one or more embodiments of the present example the lights L1 to L4 reflected by the MEMS mirror 17 are made to be L5 to L8, respectively.

According to one or more embodiments of the present example, the lights L1 to L4 are made to be incident to the MEMS mirror 17 from a direction oblique from above, however, it is not limited to this and may be made to be incident from a direction oblique from below to make a scanning range that is peripherally upward.

In one or more embodiments, L5 to L8 are reflected by the object to be measured, a portion of the diffused reflected light is again incident to the MEMS mirror 17, and a portion of the light incident to the MEMS mirror 17 is transmitted through the first half mirror 16a, the second half mirror 16b, the third half mirror 16c, and the fourth half mirror 16d, respectively. The light that is transmitted through the first half mirror 16a, the second half mirror 16b, the third half mirror 16c, and the fourth half mirror 16d is condensed by the first condenser lens 18a, the second condenser lens 18b, a third condenser lens 18c, and a fourth condenser lens 18d, and is incident to the first photodiode 19a, the second photodiode 19b, a third photodiode 19c, and a fourth photodiode 19d.

According to one or more embodiments of the seventh example, a result similar to the sixth example is produced.

### <Further embodiments>

In each of the above examples, the incident angles to the MEMS mirror of the light travelling each optical paths incident to the MEMS mirror are equal (45°, respectively).However, the invention is not limited to this and the incident angle may be any angle.

Furthermore, in each of the above examples, the scanning range from the light that travels one optical path is set such that it does not overlap with the scanning range from another optical path. However, the invention is not limited to this, and a portion of the scanning ranges of different optical paths may overlap. By allowing a portion of the scanning ranges to overlap, the measurement data in the overlapping region may be matched, misalignment of the optical system (for example, a misalignment of the mounting angle) may be corrected, and the direction and distance of the object to which a distance is to be measured may be measured seamlessly and correctly.

Furthermore, the laser scanning device 1 of each of the above examples is described as a distance measurement device which measures the distance to the object. However, the invention is not limited to a laser scanning device 1 and may also be used as another device, such as for example a laser projector. If used as a laser projector, it may be provided with a laser light source and light scanning portion configured to scan the light emitted from the laser light source, and the laser light emitted by the laser light source may be incident to the light scanner by travelling via a plurality of different optical paths.

Although the disclosure has been described with respect to only a limited number of embodiments, those skilled in the art, having benefit of this disclosure, will appreciate that various other embodiments may be devised without departing from the scope of the present invention. Accordingly, the scope of the invention should be limited only by the attached claims.

### [Description of the Reference Numerals]

- 1: laser scanning device
- 11: laser light source
- 12: laser driver
- 13: modulation signal generator
- 14: first light detector (e.g., monitor photodiode)
- 15: first resistor
- 16: light guide portion (e.g., half mirror)
- 17: light scanner (e.g., MEMS mirror)
- 18: condenser lens
- 19: second light detector (e.g., detection photodiode)
- 20: second resistor
- 21: first mixer
- 22: second mixer
- 23: computing unit

## Claims

1. A laser scanning device (1), comprising:
a light source (11); and
a light scanner (17) configured to scan a laser light emitted from the laser light source (11),
wherein
the light source (11) is configured to emit a laser light incident to the light scanner (17) from a plurality of directions.

2. The laser scanning device (1) according to claim 1, wherein the light scanner (17) comprises a reflecting mirror (171) having a reflective surface on at least one surface thereof

3. The laser scanning device (1) according to claim 1 or claim 2, wherein the laser light source (11) is configured to emit the laser light incident to the light scanner (17) from a plurality of directions via a plurality of different optical paths.

4. The laser scanning device (1) according to claim 3, wherein
the light scanner (17) comprises a reflecting mirror (171) having a reflective surface on a front surface and a reflective surface on a back surface, and
the light source (11) is configured to emit a portion of the laser light incident to the front surface of the reflecting mirror (171) and another portion of the laser light incident to the back surface of the reflecting mirror (171).

5. The laser scanning device (1) according to any of claims 1-4, further comprising a light guide portion (16) configured to branch the laser light emitted from the light source (11) and guide the branched laser light to the light scanner (17).

6. The laser scanning device (1) according to any of claims 3 to 5, wherein a scanning range by the light scanner (17) of laser light passing through at least one optical path of a plurality of different optical paths overlaps with a portion of a scanning range by the light scanner (17) of laser light passing through another optical path of the plurality of different optical paths.

7. The laser scanning device (1) according to any of claims 2 to 6, wherein the reflecting mirror (171) is a cantilever-type MEMS mirror.

8. The laser scanning device (1) according to any of claims 1 to 7, comprising a plurality of laser light sources (11a, 11b), wherein a laser power of the laser lights emitted from each laser light source (11 a, 11b) is modulated by different modulation signals.

9. The laser scanning device according to any of claims 1 to 8, further comprising a light detector (14) configured to detect light of the laser light scanned by the light scanner (17) reflected and returned by an object to which a distance is to be measured.

10. A method of measuring a distance to an object, comprising:
emitting a laser light; and
scanning the emitted laser light by means of a light scanner (17),
wherein the laser light is emitted incident to the light scanner (7) from a plurality of directions.

11. The method of claim 10, wherein emitting comprises emitting the laser light incident to the light scanner (17) from a plurality of directions via a plurality of different optical paths.

12. The method of claim 10 or claim 11, wherein emitting comprises emitting a portion of the laser light incident to a first surface of light scanner (17) and emitting another portion of the laser light incident to a second surface of the light scanner (17).

13. The method of any one of claims 10-12, further comprising branching the emitted laser light and guiding the branched laser light to the light scanner (17).

14. The method of any one of claims 10-13, further comprising detecting light of the laser light scanned by the light scanner (17) reflected and returned by an object to which a distance is to be measured.
